# EUROPEAN PATENT SPECIFICATION

(11) **EP 4 211 522 B1**
(45) Date of publication and mention of the grant of the patent: **22.04.2026**
(21) Application number: 21867233.5
(22) Date of filing: 09.09.2021
(51) Int. Cl.: G06Q 10/20

(54) **A METHOD DIRECTED TO INTERACTION IN A DIGITAL MAINTENANCE LOG SYSTEM**
VERFAHREN ZUR INTERAKTION IN EINEM DIGITALEN WARTUNGSPROTOKOLLSYSTEM
PROCÉDÉ RELATIF À UNE INTERACTION DANS UN SYSTÈME DE JOURNAL DE MAINTENANCE NUMÉRIQUE

(30) Priority: 11.09.2020 SE 2051068; 11.09.2020 SE 2051069
(43) Date of publication of application: 19.07.2023
(73) Proprietor: Farmers First AB, 235 39 Vellinge (SE)
(72) Inventor: FRIDLUND, Anders, 212 26 MALMÖ (SE); NORDGAARD, Björn, 236 61 HÖLLVIKEN (SE)
(74) Representative: AWA Sweden AB
(86) International application number: PCT/SE2021/050861
(87) International publication number: WO 2022/055410

(56) References cited:
- WO-A1-2016/056325
- JP-A- 2020 088 417
- US-A1- 2006 031 042
- US-A1- 2009 198 422
- US-A1- 2009 198 422
- US-A1- 2012 095 961
- US-A1- 2017 323 494
- US-A1- 2018 240 287
- US-A1- 2018 264 347

## Description

### Field of the invention

The present invention relates to a method directed to interaction in a digital log system intended for machine, tool or vehicle, especially related to a method for a digital maintenance log system.

### Technical Background

Different digital platforms are known in the field of logging activities in general. For instances, in WO 2016/123303 there is disclosed a fleet management system for a fleet of vehicles, which fleet management system comprises an inspection device connected to a network and configured to transmit a vehicle identification or transmit vehicle inspection information, said fleet management system also comprising an administrative processor with an administrative data storage connected to the network, where the administrative data storage is arranged to receive the vehicle identification or the vehicle inspection information into a vehicle maintenance tracker, and wherein the fleet management system also comprises a mechanic device connected to the network and configured to automatically receive the vehicle identification or the vehicle inspection information.

As hinted above, the present invention is also related to the general field of tracking activities. In the case of the present invention the method is focused on maintenance activities for a vehicle, tool or machine, e.g. machines or tools for agricultural purposes. The present invention is directed to providing a method and system which ensures full control of the activities being performed. The present invention provides an improved system and method for tracking activities where a full control and great transparency is ensured for a user of the vehicle, tool or machine. Document US 2009/198422 A1 discloses a performance management system for use with a plurality of machines operating at a common worksite. Document US 2018/264347 A1 refers to an Internet-of-things device (loT) for authenticating and verifying information about a product including an accelerometer coupled to a body for detecting acceleration, where a processor is coupled to a transceiver, accelerometer and sensor.

### Summary of the invention

The purpose above is achieved by a method involving data interaction in a digital log system intended for a machine, tool or vehicle, said method comprising
- performing an activity on said machine, tool or vehicle where data on machine/tool/vehicle identity, activity performer identity, time and position relating to performing the activity is created in real-time;
- providing the data on the machine/tool/vehicle identity, activity performer identity, time and position relating to performing the activity to the digital log system; and
- performing a digital verification of the data on machine/tool/vehicle identity, activity performer identity, time and position relating to performing the activity, wherein a mobile data unit is used for providing data linked to at least the activity being performed and the activity performer identity.

In relation to the above it may be mentioned that the expression "digital verification" implies a verification which is not dependent on human interaction as such. This implies that the digital verification according to the present invention cannot be made by a human only, or in other words, a digital verification according to the present invention may be non-human interactive. A human, such like a user or maintenance provider, may, however, also perform certain activities as a step together with the digital verification according to the present invention. This will become clear from the description below.

A digital verification according to the present invention further implies that the process being performed is reliable, and that a true result achieved will be very difficult to dupe or affect and thereby to mislead a certain user. This further implies that the method according to the present invention renders a reliable process for verification that a certain activity really has been performed in its intended way without the need of supervision of a specialist and without the need of interaction by a user or human on the activity ordering side. The method according to the present invention does not only provide a verification that an activity, such as a maintenance activity, is performed, but may in fact also provide evidence that the actual activity is performed as intended, i.e. in the right way and with the right result. This is further discussed below.

Furthermore, the mobile data unit may be used to provide data which shows the activity, but also where and when it was performed and by whom.

Moreover, in US2009198422 there is disclosed a performance management system for use of a plurality of machines operating at a common worksite. The performance management system suitably has at least one data acquisition module configured to monitor performance of the plurality of machines, and a controller in communication with the at least one data acquisition module. The controller is configured to collect machine performance data from the at least one data acquisition module, and detect a performance irregularity based on the collected machine performance data.

As should be understood, US2009198422 refers to a performance management system, which system collects information to understand the performance and find a certain under-performer of the machine park if the overall performance is too bad.

The present invention, however, refers to a digital log system for performed and verified maintenance and which system and method therefore ensures to log all maintenance activities in a secure and verified way. Furthermore, the method and system according to the present invention rely on a mobile data unit being used for providing data linked to at least the maintenance activity being performed and the activity performer identity. As should be clear from this, the general purpose of the present invention is different than US2009198422. Moreover, the present invention also involves steps not being disclosed or hinted in US2009198422. Further differences will become clear when considering the disclosure below relating to different embodiments of the present invention.

### Specific embodiments of the invention

Below some specific embodiments of the present invention are provided and explained in more detail.

According to one specific embodiment of the present invention, the step of performing the digital verification of the data is performed using at least one indicator, preferably using at least one indicator in the form of a measurable parameter. This embodiment implies that by use of an indicator in an automatic measurement, this indicator can show if the activity has been performed as intended or not. In this regard it may also be mentioned that the digital platform according to the present invention may involve Al learning with reference to suitable limit values for certain indicator parameters.

In one embodiment, said at least one indicator is a measurable parameter and wherein the step of performing a digital verification of the data involves measuring the parameter and comparing a measured value with a set limit value, and if the measured value has an allowable value in comparison with the set limit value then the verification is made. The limit value may be an absolute value, but may also be a limit value changing based on an increased understanding of a certain parameter. It is inter alia in this regard Al may be involved in a digital platform according to the present invention. In line with this, according to one specific embodiment, the set limit value is a calculated value, preferably the set limit value is based on an algorithm scanning similar events. As such, the present invention provides a method in which Al analytics may be used to create a verified maintenance log. The Al analytics verification process according to the present invention may thus be based on a self-learning algorithm.

"Similar events" above may be regarded as events in which similar machines/vehicles/tools has been operated in the same way and at similar conditions (geography, crop being used etc.).

According to yet another specific embodiment of the present invention, several indicators are used when performing the digital verification of the data. Also in this case measurable parameters may be used for several or all the indicators. Moreover, using several indicators may increase the accuracy of the method according to the present invention.

According to yet another embodiment of the present invention, the digital log system also comprises a user interface provided to a user of the machine, tool or vehicle, and wherein the step of providing the data on the machine/tool/vehicle identity, activity performer identity, time and position relating to performing the activity involves visualization in the user interface. In relation to this aspect it should also be stated that a user, suitably being the owner of the machine/tool/vehicle, may also be the activity performer, such as a maintenance provider or the like. This further implies that the owner may perform maintenance activities by himself, and where the method still provides a 100% reliable digital log of all performed activities.

As should be totally understood from above, the method according to the present invention is especially related to providing a reliable digital maintenance log. Therefore, according to one embodiment, the activity is a maintenance activity.

The method and system according to the present invention may also involve other means. According to one specific embodiment, data on machine/tool/vehicle identity, time and position is provided by a unique identifier arranged on the machine, tool or vehicle, preferably a QR code, RFID unit, chip or tracker unit arranged on the machine, tool or vehicle, more preferably a tracker unit arranged on the machine, tool or vehicle. According to yet another embodiment, a chip unit is arranged on the machine, tool or vehicle, said chip unit arranged to provide data to the digital log system.

Furthermore, and as mentioned, according to the present invention a mobile data unit is used for providing data linked to at least the activity being performed and the activity performer identity. The embodiments presented above provide possibilities of tracking the machine, tool or vehicle, which as such ensures to provide the position of the machine, tool or vehicle when a certain activity is performed, and/or provides units where external data may be transferred to and from the machine, tool or vehicle. Moreover, the mobile data unit may be used in different ways. First of all, a camera unit of the mobile data unit may be a key unit to use for data recording. Secondly, also the camera unit may be used in different ways, e.g. to read a QR code or serial number of the machine, tool or vehicle.

Yet another alternative is the add-on of using a mobile unit to transfer data to the digital platform, either by itself or together with data from a tracking unit or the like so that data on activity and position is provided at the same time.

The system and method according to the present invention may also involve using yet other units. According to one specific embodiment of the present invention, one or more sensors are arranged on the machine, tool or vehicle, and wherein said one or more sensors are arranged to detect a parameter change linked to a certain activity and send data with reference to said parameter change. The sensor(s) may be used to measure a certain parameter indicator as discussed above. To give some examples, one sensor may be used to measure a certain parameter of a motor of e.g. a machine. One possibility is for example to measure the viscosity of the motor oil. This parameter may be used to judge if the motor oil has been changed or not, and also indicate when it is time to change the motor oil. Different types of sensors are possible to use, one example is nano-sensors. With reference to the above it should also be mentioned that the method according to the present invention may involve indicating if an activity is needed.

Regardless of the above, it should be said that the concept of the present invention is directed to digital verification on maintenance activities. The method and system according to the present invention provide a data interaction where the data is not possible to manipulate and where the data is verified. This in turn enables an accurate maintenance log, which is a key feature and advantage of the present invention. This key aspect of the present invention is thus still the key aspect even if possible add-ons, such as for indicating certain maintenance needs etc., also may apply.

According to yet another specific embodiment, data in the digital log system is sent to a server and saved, and wherein saved data is used to optimise maintenance of a specific machine, tool or vehicle. This may also be used as a data source to enable to indicate when a certain activity is needed for one specific machine, tool or vehicle. As a continuation of this, according to one embodiment, data on machine/tool/vehicle identity, time and/or position generated and saved from different users is compared to optimise maintenance of a specific machine, tool or vehicle to a certain user. This is one example where data generated from several units may be used to indicate to one specific user when a certain activity is needed. Moreover, this may also be a way of pro-longing the life-time of a certain machine, tool or vehicle. As optimal timing of maintenance may be provided according to the present invention, the life-time may be pro-longed, which in turn implies that the value of a certain machine, tool or vehicle is increased in comparison to one not being serviced at an optimal timing. The above implies that the method according to the present invention may provide a change of the maintenance schedule of a certain machine, tool or vehicle. In this regard it should be said to providing a notification that a specific maintenance activity should be performed is much more important than the actual timing therefore according to the present invention.

Moreover, in relation to the above it may again also be said that the present invention is focused on a verification loop of maintenance activities with data that is not possible to manipulate during the data interaction and where verification of the maintenance is performed. Therefore, to provide prediction on maintenance needs or optimisation of maintenance and timing therefore should only be seen as possible add-ons of the concept according to the present invention.

According to yet another specific embodiment, the method involves a multi-verification procedure in which the digital verification is complemented with at least one other verification, performed by the activity performer, which first provides data (on machine/tool/vehicle identity, activity performer identity, time and position relating to performing the activity) and a verification, or performed by the user of the machine, tool or vehicle, which user performs a personal data verification, or complemented with both. It should again be said that the method according to the present invention involves at least one digital verification as explained above. According to the embodiment here this digital verification is complemented with another verification step or several, which complements may be made digital or manual, or both. The activity performer may perform a verification, or the owner or user may verify that an activity like a maintenance has been performed, which in turn is verified by a change in an indicator value or the like.

According to yet another embodiment, the method also involves providing a calculation of a machine value optimisation coefficient on the machine, tool or vehicle, wherein the following data is provided in a digital platform:
- basic data on the machine, tool or vehicle;
- data on performed maintenance from a digital maintenance log together with digitally certified verification(s) on performed maintenance;
   said method also comprising
- then calculating the machine value optimisation coefficient; and
- providing the machine value optimisation coefficient, preferably in a digital format.

The expression "machine value optimisation coefficient" should be seen as a value being calculated which provides an indication of the machine value based on maintenance being performed, especially verified maintenance activities being performed. This is further explained below. As been mentioned above, the present invention is focused on verification of maintenance. Therefore, also with regards to the "machine value optimisation coefficient" then the link to verified maintenance is the key feature according to the present invention. This implies that the coefficient is being calculated based on the verified maintenance activities being performed. Again verified maintenance activities being such where the data indicating the same was not possible to manipulate and where the activities have been verified.

Moreover, the digital platform being mentioned above, may be part of the digital log system mentioned above, that is as part of the entire digital maintenance log system, or may in fact be a separated system or unit where data is being transferred between these two different systems (platforms).

As should be understood from above, the method or system of the digital maintenance logging according to the present invention may in this regard be used to also provide a so called machine value optimisation coefficient, which in turn is a value of the status of a certain machine, tool or vehicle, where also the performed maintenance activities and certified verifications thereof are used as an input when considering the actual value, e.g. for a resale value of a certain machine, tool or vehicle.

According to one embodiment of the present invention, the machine value optimisation coefficient provides a value directly linked to the maintenance activities that have been performed and where the data of these activities is verified. This in turn also implies that this coefficient may be linked to an optimisation degree of the maintenance activities being performed. Furthermore, also other data sources may be used, such as certain basic data and parameters, as further described with examples below.

According to one specific embodiment, the basic data is at least one parameter relating to any of the following: manufacturer, model, or year of manufacturing, or a combination thereof. Only one of these or several may be used. Also here is should be said that using these basic data parameters is an add-on to the certified verifications of the maintenance activities, the latter being the key feature according to the present invention.

According to yet another specific embodiment, the following data is also provided in the digital platform and used for the calculation of the machine value optimisation coefficient:
- data on usage of the machine, tool or vehicle,
preferably wherein the data on usage is at least one parameter relating to any of the following: distance run, main production, production type, road usage transport, tillage, processed area, usage time, or output power, or a combination thereof. It should be noted that using the usage data above is optional, and that the key feature of the present invention, with reference to the calculation of a machine value optimisation coefficient, is the maintenance activities being performed and logged into the system in a verified way.

As an example of the above, the parameter "distance run" together with the data on maintenance activities being performed, and verified for real, may be the parameters affecting the machine value optimisation coefficient the most. As an example, when comparing two vehicles where one has run the double distance, however with a much greater maintenance activity log, performed and verified according to an intended schedule, then these vehicles may get the same level of machine value optimisation coefficient, i.e. should be judged as having a similar level of resale value at that given time.

According to yet another embodiment, the following data is also provided in the digital platform and used for the calculation of the machine value optimisation coefficient:
- geo data linked to the usage of the machine, tool or vehicle,
preferably wherein the geo data linked to the usage is at least one parameter relating to any of the following: soil type, topography, humidity, or weather conditions, or a combination thereof. Also in this regard it is important to understand that using this type of geo data in one possible alternative, however only optional according to the present invention.

The addition of the geo data as an input is a possible add-on, but should be seen as optional, when providing a machine value optimisation coefficient according to the present invention. Another such possible optional add-on is momentary market information. Therefore, according to one specific embodiment, the method also involves adjustment based on market data or market prognosis data. This may e.g. be general prognosis of certain types of machines or tools, or may be data generated from other data sources taking transactions of similar used machines or tools into account.

To summarize, the present invention provides a method and digital system in which digital verification is performed to ensure that certain activities, e.g. maintenance, have been performed on a machine, tool or vehicle. Moreover, the method may involve using indicators in an automatic way. Furthermore, the method may involve Al analytics being used to create a verified maintenance log. The method according to the present invention eliminates or at least limits deficient or incorrect information. The method according to the present invention eliminates or at least limits the human factor in registration of maintenance activities. Moreover, the method according to the present invention makes evident wherever a maintenance effort has in fact been carried out (not just registered). Suitably, a connected network of devices collect data from various sources to build a reliable bank of valid and required information that is then used by a computerized Al analytics process to verify the maintenance log. Moreover, the Al analytic verification process is suitably based on a self-learning algorithm. The method according to the present invention may be used also for indication when a certain maintenance activity is needed, and to change a certain set maintenance schedule, when the method indicates the need thereof.

The system provided according to the present invention may be called a Digitally Verified Maintenance Log (DVML). The Digitally Verified Maintenance Log (DVML) provided according to the present invention, on its own or in conjunction with other sources of data, can be used to calculate relevant data for a certain machine, tool or vehicle. As an example, the DVML can create a reliable and dynamic product DNA. Values to a certain user may be that the DVML can contribute to a higher trade-in value for a certain product, such as a machine, tool or vehicle. Moreover, the DVML can be used to eliminate financial risk. The DVML can also contribute to product development. Moreover, the DVML can contribute in making the maintenance process more efficient. Furthermore, the DVML can contribute in making the use of the product more reliable and efficient. The DVML according to the present invention will also be fully accessible for a product owner during and after the product lifecycle.

Furthermore, it should also be noted that the method according to the present invention, and DVML as explained above, is not user-dependent. This implies that it may be transferred to a new owner when a certain machine, tool or vehicles have been sold and thus a new ownership has been established.

Below, there is provided a summary of advantages according to the present invention. First of all, the system and method according to the present invention enables to keep a log over all maintenance activities being performed in a verified way where the data interaction ensures non-manipulated data being verified. The method according to the present invention involves using a mobile data unit to ensure both activity, position and user identity of a maintenance activity being performed. The system according to the present invention enables to provide information to a certain user when a maintenance activity should be performed to optimise these activities for different machines. To follow this plan provides a value in itself for a user to keep a certain machine in its best condition and with the highest possible second-hand value. Moreover, the system enables data saving and as such may also be used for optimisation over time for certain machines, vehicles and tools. Furthermore, as mentioned throughout the description and in the following, the present invention is focused on ensuring that the data on maintenance activities provided into the system has to be verified data. This is an important feature for ensuring that suitable maintenance activities in fact are performed at a suitable time.

Moreover, the present invention may provide what may be seen as a dynamic maintenance plan. This implies that the maintenance plan may be changed based on another data input parameter. Such data input parameter may e.g. be the time when a certain maintenance activity was performed or a performance data input (such as after a maintenance activity was performed), or e.g. another external data input, such as type of crop being operated, a changed geography or the like. Therefore, according to one specific embodiment of the present invention, the method involves providing a dynamic maintenance plan for a user, said dynamic maintenance plan arranged to be changed based on the change of at least one data input parameter, such as date when a maintenance activity was performed, performance data of the machine/tool/vehicle and/or operational position of the machine/tool/vehicle.

The digital maintenance plan and platform therefore may also involve other data input, such as the specific user and maintenance activity performer. Also a change in this may affect the entire maintenance plan. This also provides a value for a certain owner to follow the performance of a certain machine/vehicle/tool and the user operating the same.

### A second aspect of the present invention

In general, according to a second aspect the present invention is directed to a method for calculation of a machine value optimisation coefficient on a machine, tool or vehicle, especially related to such an operation in a digital platform and based on data provided in such a platform.

### Summary of the second aspect of the present invention

According to a second aspect, the present invention is related to a method for calculation of a machine value optimisation coefficient on a machine, tool or vehicle, wherein the following data is provided in a digital platform:
- basic data on the machine, tool or vehicle;
- data on performed maintenance from a digital maintenance log together with certified verification(s) on performed maintenance;
   said method also comprising
- then calculating the machine value optimisation coefficient; and
- providing the machine value optimisation coefficient, preferably in a digital format.

As clearly stated above, the present invention is directed to verified maintenance data, where such data is not possible to manipulate and which also have been verified with respect to the activities being performed. This is important to understand as it is such data is used as the key input for calculating the machine value optimisation coefficient according to above. As mentioned above, the machine value optimisation coefficient provides a value directly linked to the maintenance activities that have been performed and where the data of these activities is verified. Other data sources may be used on an optional basis, such as certain basic data and parameters, as further described with examples below.

As hinted above, the method involves using data on different aspects. One key such data type is certified verification(s) on performed maintenance on the specific machine, tool or vehicle. These verifications are provided from a digital maintenance log implying that the data may be collected in an organized and verified way, i.e. not possible or at least very difficult to manipulate by a user or owner of a certain machine, tool or vehicle in question. This is further explained and exemplified below. This aspect is in general a key feature of the present invention. By use of maintenance data which is verified in a certified way the reliability is very high for the method intended for obtaining a machine value optimisation coefficient according to the present invention. To use verified maintenance activity data, as explained above, to calculate a machine value optimisation coefficient is a key feature according to this second aspect of the present invention. This is also a novel feature when compared with existing methods and system today. For instance, in CN110288371 A there is disclosed a second-hand car real-time pricing method and system, which does not rely on data on maintenance activities where this data is verified data and thus not possible to manipulate. Again, the second aspect of the present invention is totally focused on the effect of verified maintenance activities for the calculation of the coefficient.

Furthermore, in US 2007/0078791 there is disclosed an asset management system, which comprises one or more data collection devices configured to monitor one or more operating conditions of a work machine; and a processor configured to receive data from the one or more data collection devices, predict a cost to maintain the work machine in the future based on the data from the one or more data collection devices, and compare the predicted cost to maintain the work machine to a depreciated value of the work machine to determine a time for replacement of the work machine. Also this is very different when being compared with the second aspect of the present invention. US 2007/0078791 is focused on calculating when a component should be replaced, i.e. predictive maintenance. Moreover, this document is also directed to understanding when the value of a certain work machine is too low to bear the needed maintenance work. Again, the second aspect of the present invention is focused on verified maintenance activity data as a source to calculate a machine value optimisation coefficient, which is something very different. The clear focus of the present invention on verified maintenance data, which also is non-manipulable, is an important difference when compared with the methods described in the documents above.

### Specific embodiments of the second aspect of the present invention

Below specific embodiments of the second aspect of the present invention are disclosed and discussed in more detail.

According to one specific embodiment, the certified verification(s) are provided as digital verification(s) data input, preferably automated by a computer unit. This automated input may thus be created by a computer, for instance as a form of probability of how much of the total maintenance which may be verified as being performed for sure. This type of probability input should also be regarded as a form of input covered by the expression "digital verification(s) data input" according to the present invention. Moreover, this probability input may in turn be created as a calculation from an algorithm.

Moreover, in relation to the above it may be mentioned that the expression "digital verification" implies a verification which is not dependent on human interaction as such. This implies that the digital verification according to the present invention cannot be made by a human only, or in other words, a digital verification according to the present invention may be non-human interactive. A human, such like a user or maintenance provider, may, however, also perform certain activities as a step together with the digital verification according to the present invention. This will become clear from the description below.

A digital verification according to the present invention further implies that the verification process being performed is reliable, and that a true result achieved will be very difficult to dupe or affect and thereby to mislead a certain user. This further implies that the method according to the present invention is based on a reliable process for verification where a certain activity really has been performed in its intended way without the need of supervision of a specialist and without the need of interaction by a user or human on the activity ordering side. The method according to the present invention is preferably based on a digital verification that an activity, such as a maintenance activity, is performed for sure, and not only on human based verifications. Such human based verifications may, however, be a complement when obtaining a machine value optimisation coefficient on a machine, tool or vehicle according to the present invention.

The method according to the second aspect of the present invention may be based on different data types, also obtainable from different sources. Such sources may as a first start be from a digital maintenance log. Other possibilities are from different types of databases and/or from units, such as chips or other computer or processing units, arranged on the machine, tool or vehicle as such.

According to one specific embodiment of the present invention, the basic data is at least one parameter relating to any of the following: manufacturer, model, or year of manufacturing, or a combination thereof. As an example, this type of data may be provided from the digital maintenance log in itself or may be transferred or sent from another database, open or specific for a certain machine, tool or vehicle, or may be sent from a unit arranged on the machine, tool or vehicle.

As clearly mentioned above, verified data on maintenance activities is the key feature and starting point of the present invention. Therefore, to also use basic data as mentioned above, or other data as described below, should only be seen as possible add-ons to the method according to the present invention.

According to yet another specific embodiment of the second aspect of the present invention, the following data is also provided in the digital platform and used for the calculation of the machine value optimisation coefficient:
- data on usage of the machine, tool or vehicle. According to yet another embodiment, the data on usage is at least one parameter relating to any of the following: distance run, main production, production type, road usage transport, tillage, processed area, usage time, or output power, or a combination thereof.

As an example of the above, the parameter "distance run" together with the data on maintenance activities being performed, and verified for real, may be the parameters affecting the machine value optimisation coefficient the most. As an example, when comparing two vehicles where one has run the double distance, however with a much greater maintenance activity log, performed and verified according to an intended schedule, then these vehicles may get the same level of machine value optimisation coefficient, i.e. should be judged as having a similar level of resale value at that given time.

According to yet another specific embodiment of the present invention, the following data is also provided in the digital platform and used for the calculation of the machine value optimisation coefficient:
- geo data linked to the usage of the machine, tool or vehicle,
preferably wherein the geo data linked to the usage is at least one parameter relating to any of the following: soil type, topography, humidity, or weather conditions, or a combination thereof.

The addition of the geo data as an input is a possible add-on, but should be seen as optional, when providing a machine value optimisation coefficient according to the present invention. Another such possible optional add-on is momentary market information. Therefore, according to one specific embodiment, the method also involves adjustment based on market data or market prognosis data. This may e.g. be general prognosis of certain types of machines or tools, or may be data generated from other data sources taking transactions of similar used machines or tools into account.

As should be understood from above, the data input on verified maintenance activities is a key input for the calculation according to the present invention. Moreover, as stated above a digital maintenance log is suitably one key data source for obtaining this type of data when performing the method according to the present invention. Furthermore, this digital maintenance log may also provide yet further data input according to the present invention. In line with this, according to one embodiment, the data on performed maintenance from a digital maintenance log comprises data on machine/tool/vehicle identity, maintenance provider identity, time and position relating to performed maintenance activities. Furthermore, according to yet another specific embodiment, the certified verification(s) on all performed maintenance are verified based on data on machine/tool/vehicle identity, activity performer identity, time and position relating to performing maintenance activities.

In relation to above it should be stated that the digital log system may also comprise a user interface provided to a user of the machine, tool or vehicle, and wherein the step of providing the data on the machine/tool/- vehicle identity, activity performer identity, time and position relating to performing the activity involves visualization in the user interface. In relation to this aspect it should also be stated that a user, suitably being the owner of the machine/tool/vehicle, may also be the activity performer, such as a maintenance provider or the like. This further implies that the owner may perform maintenance activities by himself, and where the method still provides a 100% reliable digital log of all performed activities. Therefore, by use of the method according to the present invention, a machine value optimisation coefficient may be calculated and visualized in a reliable way independently who has performed the maintenance on a specific machine, tool or vehicle, e.g. even if the owner himself has performed parts of the maintenance activities.

Furthermore, the verification procedure as such may also have different alternatives and embodiments according to the present invention. According to one specific embodiment, verification of the data is performed by means of digital verification and by using at least one indicator, preferably using at least one indicator in the form of a measurable parameter. This embodiment implies that by use of an indicator in an automatic measurement, this indicator can show if the activity has been performed as intended or not. In this regard it may also be mentioned that the digital platform according to the present invention may involve Al learning with reference to suitable limit values for certain indicator parameters.

In one embodiment, said at least one indicator is a measurable parameter and wherein the step of performing a digital verification of the data involves measuring the parameter and comparing a measured value with a set limit value, and if the measured value has an allowable value in comparison with the set limit value then the verification is made. The limit value may be an absolute value, but may also be a limit value changing based on an increased understanding of a certain parameter. It is inter alia in this regard Al may be involved in a digital platform according to the present invention. In line with this, according to one specific embodiment, the set limit value is a calculated value, preferably the set limit value is based on an algorithm scanning similar events. As such, the present invention provides a method in which Al analytics may be used to create a verified maintenance log. The Al analytics verification process according to the present invention may thus be based on a self-learning algorithm.

According to yet another specific embodiment of the present invention, several indicators are used when performing the digital verification of the data. Also in this case measurable parameters may be used for several or all the indicators. Moreover, using several indicators may increase the accuracy of the method according to the present invention.

The method and system according to the present invention may also involve other means, which in turn may be part of data transfer in the digital maintenance log and as such also for the calculation of the machine value optimisation coefficient. According to one specific embodiment, data on machine/tool/vehicle identity, time and position is provided by a unique identifier arranged on the machine, tool or vehicle, preferably a QR code, RFID unit, chip or tracker unit arranged on the machine, tool or vehicle, more preferably a tracker unit arranged on the machine, tool or vehicle. According to yet another embodiment, a chip unit is arranged on the machine, tool or vehicle, said chip unit arranged to provide external data to the digital log system, which in turn is used for the calculation of the machine value optimisation coefficient. Furthermore, according to one embodiment, a mobile data unit is used for providing data linked to at least the activity being performed and the activity performer identity. The embodiments presented above provide possibilities of tracking the machine, tool or vehicle, which as such ensures to provide the position of the machine, tool or vehicle when a certain activity is performed, and/or provides units where external data may be transferred to and from the machine, tool or vehicle. Yet another alternative is the add-on of using a mobile unit to transfer data to the digital platform, either by itself or together with data from a tracking unit or the like so that data on activity and position is provided at the same time. As mentioned above, these embodiments may be involved when building a reliable digital maintenance log platform, which in turn may be a key data source input when calculating a machine value optimisation coefficient according to the present invention.

The system and method according to the second aspect of the present invention may also involve using yet other units to provide data input. According to one specific embodiment of the present invention, one or more sensors are arranged on the machine, tool or vehicle, and wherein said one or more sensors are arranged to detect a parameter change linked to a certain activity and send data with reference to said parameter change. The sensor(s) may be used to measure a certain parameter indicator as discussed above. To give some examples, one sensor may be used to measure a certain parameter of a motor of e.g. a machine. One possibility is for example to measure the viscosity of the motor oil. This parameter may be used to judge if the motor oil has been changed or not, and also indicate when it is time to change the motor oil. Different types of sensors are possible to use, one example is nano-sensors. With reference to the above it should also be mentioned that the method according to the present invention may also provide the value of indicating if an activity is needed.

According to yet another specific embodiment, data generated in the digital log system is sent to a server and saved, and wherein saved data is used to optimise maintenance of a specific machine, tool or vehicle. As hinted above, this may also be used as a data source to enable to indicate when a certain activity is needed for one specific machine, tool or vehicle. As a continuation of this, according to one embodiment, data generated and saved from different users is compared to optimise maintenance of a specific machine, tool or vehicle to a certain user. This is one example where data generated from several units may be used to indicate to one specific user when a certain activity is needed. Moreover, this may also be a way of pro-longing the life-time of a certain machine, tool or vehicle. As optimal timing of maintenance may be provided according to the present invention, the life-time may be pro-longed, which in turn implies that the value of a certain machine, tool or vehicle is increased in comparison to one not being serviced at an optimal timing. The above implies that the method according to the present invention may provide a change of the maintenance schedule of a certain machine, tool or vehicle. The above should be seen as yet other potential input for the provision of a machine value optimisation coefficient according to the present invention.

According to yet another specific embodiment, the method involves a multi-verification procedure in which the digital verification is complemented with at least one other verification, performed by the activity performer, which first provides data and a verification, or performed by the user of the machine, tool or vehicle, which user performs a personal data verification, or complemented with both. It should again be said that the method according to the present invention involves at least one digital verification as explained above. According to the embodiment here this digital verification is complemented with another verification step or several, which complements may be made digital or manual, or both. The activity performer may perform a verification, or the owner or user may verify that an activity like a maintenance has been performed, which in turn is verified by a change in an indicator value or the like.

As should be understood from above, the second aspect of the present invention provides a method for calculating a machine value optimisation coefficient in a reliable way, based on inter alia digitally verified maintenance activities, suitably provided from a digital platform therefore. The method according to the present invention may take several data inputs and parameters into account when providing the machine value optimisation coefficient. Furthermore, also embodiments of a digital maintenance log as described above may be of importance for the provision of different data inputs according to the present invention.

In relation to the second aspect of the present invention it should be noted that any embodiment disclosed may also be combined with the first and main aspect of the present invention, i.e. the digital plus verified maintenance log and a method therefore. Any form of cross-over between these two different aspects may be considered according to the present invention, which further implies that subclaims provided below may be used to be combined with the most general idea of both the first and the second aspect of the present invention falling within the scope of the appended claims.

## Claims

1. A method involving data interaction in a digital log system intended for a machine, tool or vehicle, said method comprising
- performing an activity on said machine, tool or vehicle where data on machine/tool/vehicle identity, activity performer identity, time and position relating to performing the activity is created in real-time;
- providing the data on the machine/tool/vehicle identity, activity performer identity, time and position relating to performing the activity to the digital log system; and
- performing a digital verification of the data on machine/tool/vehicle identity, activity performer identity, time and position relating to performing the activity, wherein a mobile data unit is used for providing data linked to at least the activity being performed and the activity performer identity,
wherein the step of performing the digital verification of the data is performed using at least one indicator which is a measurable parameter and wherein the step of performing a digital verification of the data involves measuring the parameter and comparing a measured value with a set limit value, and if the measured value has an allowable value in comparison with the set limit value then the verification is made.

2. The method according to claim 1, wherein the set limit value is a calculated value.

3. The method according to claim 1 or 2, wherein several indicators are used when performing the digital verification of the data.

4. The method according to any of the preceding claims, wherein the digital log system also comprises a user interface provided to a user of the machine, tool or vehicle, and wherein the step of providing the data on the machine/tool/vehicle identity, activity performer identity, time and position relating to performing the activity involves visualization in the user interface.

5. The method according to any of claims 1-4, wherein the activity is a maintenance activity.

6. The method according to any of claims 1-5, wherein data on machine/tool/vehicle identity, time and position is provided by a unique identifier arranged on the machine, tool or vehicle.

7. The method according to any of claims 1-6, wherein a chip unit is arranged on the machine, tool or vehicle, said chip unit arranged to provide data to the digital log system.

8. The method according to any of claims 1-7, wherein one or more sensors are arranged on the machine, tool or vehicle, and wherein said one or more sensors are arranged to detect a parameter change linked to a certain activity and send data with reference to said parameter change.

9. The method according to any of claims 1-8, wherein data in the digital log system is sent to a server and saved, and wherein saved data is used to optimise maintenance of a specific machine, tool or vehicle.

10. The method according to any of the preceding claims, wherein the method involves a multi-verification procedure in which the digital verification is complemented with at least one other verification, performed by the activity performer, which first provides data and a verification, or performed by the user of the machine, tool or vehicle, which user performs a personal data verification, or complemented with both.

11. The method according to any of the preceding claims, wherein the method involves providing a dynamic maintenance plan for a user, said dynamic maintenance plan arranged to be changed based on the change of at least one data input parameter, such as date when a maintenance activity was performed, performance data of the machine/tool/vehicle and/or operational position of the machine/tool/vehicle.

12. The method according to any of the preceding claims, wherein the method also involves providing a calculation of a machine value optimisation coefficient on the machine, tool or vehicle, wherein the following data is provided in a digital platform:
- basic data on the machine, tool or vehicle;
- data on performed maintenance from a digital maintenance log together with digitally certified verification(s) on performed maintenance;
said method also comprising
- then calculating the machine value optimisation coefficient; and
- providing the machine value optimisation coefficient.

13. The method according to claim 12, wherein the basic data is at least one parameter relating to any of the following: manufacturer, model, or year of manufacturing, or a combination thereof.

14. The method according to claim 12 or 13, wherein the following data is also provided in the digital platform and used for the calculation of the machine value optimisation coefficient:
- geo data linked to the usage of the machine, tool or vehicle.

## Patentansprüche

1. Verfahren, umfassend Dateninteraktion in einem digitalen Protokollsystem, das für eine Maschine, ein Werkzeug oder ein Fahrzeug bestimmt ist, wobei das Verfahren Folgendes umfasst:
- Durchführen einer Aktivität an der Maschine, dem Werkzeug oder dem Fahrzeug, wobei Daten über die Identität der Maschine/des Werkzeugs/des Fahrzeugs, die Identität des Ausführenden der Aktivität, die Zeit und die Position in Bezug auf die Durchführung der Aktivität in Echtzeit erzeugt werden;
- Bereitstellen der Daten über die Identität der Maschine/des Werkzeugs/des Fahrzeugs, die Identität des Ausführenden der Aktivität, die Zeit und die Position in Bezug auf die Durchführung der Aktivität an das digitale Protokollsystem; und
- Durchführen einer digitalen Verifizierung der Daten über die Identität der Maschine/des Werkzeugs/des Fahrzeugs, die Identität des Ausführenden der Aktivität, die Zeit und die Position in Bezug auf die Durchführung der Aktivität, wobei eine mobile Dateneinheit zum Bereitstellen von Daten verwendet wird, die zumindest mit der durchzuführenden Aktivität und der Identität des Ausführenden der Aktivität verknüpft sind,
wobei der Schritt des Durchführens der digitalen Verifizierung der Daten unter Verwendung mindestens eines Indikators ausgeführt wird, der ein messbarer Parameter ist, und wobei der Schritt des Durchführens einer digitalen Verifizierung der Daten Messen des Parameters und Vergleichen eines Messwerts mit einem festgelegten Grenzwert umfasst und dann, wenn der Messwert einen zulässigen Wert im Vergleich mit dem festgelegten Grenzwert aufweist, die Verifizierung durchgeführt wird.

2. Verfahren nach Anspruch 1, wobei der festgelegte Grenzwert ein berechneter Wert ist.

3. Verfahren nach Anspruch 1 oder 2, wobei mehrere Indikatoren verwendet werden, wenn die digitale Verifizierung der Daten durchgeführt wird.

4. Verfahren nach einem der vorhergehenden Ansprüche, wobei das digitale Protokollsystem außerdem eine Benutzeroberfläche umfasst, die für einen Benutzer der Maschine, des Werkzeugs oder des Fahrzeugs vorgesehen ist, und wobei der Schritt des Bereitstellens der Daten über die Identität der Maschine/des Werkzeugs/des Fahrzeugs, die Identität des Ausführenden der Aktivität, die Zeit und die Position in Bezug auf die Durchführung der Aktivität Visualisierung auf der Benutzeroberfläche umfasst.

5. Verfahren nach einem der Ansprüche 1-4, wobei die Aktivität eine Wartungsaktivität ist.

6. Verfahren nach einem der Ansprüche 1-5, wobei Daten über die Identität, der Maschine/des Werkzeugs/des Fahrzeugs, die Zeit und die Position durch eine eindeutige Kennung bereitgestellt werden, die an der Maschine, dem Werkzeug oder dem Fahrzeug angeordnet ist.

7. Verfahren nach einem der Ansprüche 1-6, wobei eine Chipeinheit an der Maschine, dem Werkzeug oder dem Fahrzeug angeordnet ist, wobei die Chipeinheit so angeordnet ist, dass sie Daten für das digitale Protokollsystem bereitstellt.

8. Verfahren nach einem der Ansprüche 1-7, wobei ein oder mehrere Sensoren an der Maschine, dem Werkzeug oder dem Fahrzeug angeordnet sind und wobei der eine oder die mehreren Sensoren so angeordnet sind, dass sie eine mit einer bestimmten Aktivität verknüpfte Parameteränderung erfassen und Daten in Bezug auf die Parameteränderung senden.

9. Verfahren nach einem der Ansprüche 1-8, wobei Daten in dem digitalen Protokollsystem an einen Server gesendet und gespeichert werden, und wobei gespeicherte Daten verwendet werden, um die Wartung einer bestimmten Maschine, eines bestimmten Werkzeugs oder eines bestimmten Fahrzeugs zu optimieren.

10. Verfahren nach einem der vorhergehenden Ansprüche, wobei das Verfahren eine Mehrfachverifizierungsprozedur umfasst, bei der die digitale Verifizierung durch mindestens eine weitere Verifizierung ergänzt wird, die von dem Ausführenden der Aktivität durchgeführt wird, der zuerst Daten und eine Verifizierung bereitstellt, oder die vom Benutzer der Maschine, des Werkzeugs oder des Fahrzeugs durchgeführt wird, wobei der Benutzer eine Verifizierung personenbezogener Daten durchführt, oder durch beides ergänzt wird.

11. Verfahren nach einem der vorhergehenden Ansprüche, wobei das Verfahren Bereitstellen eines dynamischen Wartungsplans für einen Benutzer umfasst, wobei der dynamische Wartungsplan so ausgelegt ist, dass er basierend auf der Änderung mindestens eines Dateneingabeparameters wie etwa des Datums der Durchführung einer Wartungsaktivität, der Leistungsdaten der Maschine/des Werkzeugs/Fahrzeugs und/oder der Betriebsposition der Maschine/des Werkzeugs/Fahrzeugs, geändert wird.

12. Verfahren nach einem der vorhergehenden Ansprüche, wobei das Verfahren außerdem Bereitstellen einer Berechnung eines Maschinenwertoptimierungskoeffizienten an der Maschine, dem Werkzeug oder dem Fahrzeug umfasst, wobei die folgenden Daten in einer digitalen Plattform bereitgestellt werden:
- Basisdaten der Maschine, des Werkzeugs oder des Fahrzeugs;
- Daten über durchgeführte Wartungsarbeiten aus einem digitalen Wartungsprotokoll zusammen mit digital zertifizierten Verifizierungen über die durchgeführten Wartungsarbeiten;
wobei das Verfahren außerdem Folgendes umfasst:
- anschließendes Berechnen des Maschinenwertoptimierungskoeffizienten; und
- Bereitstellen des Maschinenwertoptimierungskoeffizienten.

13. Verfahren nach Anspruch 12, wobei es sich bei den Basisdaten um mindestens einen Parameter handelt, der sich auf eines von Folgenden bezieht: Hersteller, Modell oder Herstellungsjahr oder eine Kombination davon.

14. Verfahren nach Anspruch 12 oder 13, wobei die folgenden Daten außerdem in der digitalen Plattform bereitgestellt und für die Berechnung des Maschinenwertoptimierungskoeffizienten verwendet werden:
- Geodaten, die mit der Nutzung der Maschine, des Werkzeugs oder des Fahrzeugs verknüpft sind.

## Revendications

1. Procédé impliquant une interaction de données dans un système de journal numérique destiné à une machine, un outil ou un véhicule, ledit procédé comprenant
- la réalisation d'une activité sur ladite machine, ledit outil ou véhicule où sont créées en temps réel des données sur l'identité de la machine/l'outil/le véhicule, l'identité de l'exécutant de l'activité, l'heure et la position relatives à la réalisation de l'activité ;
- la fourniture au système de journal numérique des données sur l'identité de la machine/l'outil/le véhicule, l'identité de l'exécutant de l'activité, l'heure et la position relatives à la réalisation de l'activité ; et
- la réalisation d'une vérification numérique des données sur l'identité de la machine/l'outil/le véhicule, l'identité de l'exécutant de l'activité, l'heure et la position relatives à la réalisation de l'activité, dans lequel une unité de données mobile est utilisée pour fournir des données liées au moins à l'activité en cours de réalisation et à l'identité de l'exécutant de l'activité,
dans lequel l'étape de réalisation de la vérification numérique des données est réalisée à l'aide d'au moins un indicateur qui est un paramètre mesurable et dans lequel l'étape de réalisation d'une vérification numérique des données implique la mesure du paramètre et la comparaison d'une valeur mesurée avec une valeur limite fixée, et si la valeur mesurée a une valeur admissible par comparaison avec la valeur limite fixée, alors la vérification est effectuée.

2. Procédé selon la revendication 1, dans lequel la valeur limite fixée est une valeur calculée.

3. Procédé selon la revendication 1 ou 2, dans lequel plusieurs indicateurs sont utilisés lors de la réalisation de la vérification numérique des données.

4. Procédé selon l'une quelconque des revendications précédentes, dans lequel le système de journal numérique comprend également une interface utilisateur fournie à un utilisateur de la machine, de l'outil ou du véhicule, et dans lequel l'étape de fourniture des données sur l'identité de la machine/l'outil/le véhicule, l'identité de l'exécutant de l'activité, l'heure et la position relatives à la réalisation de l'activité implique une visualisation dans l'interface utilisateur.

5. Procédé selon l'une quelconque des revendications 1 à 4, dans lequel l'activité est une activité de maintenance.

6. Procédé selon l'une quelconque des revendications 1 à 5, dans lequel des données sur l'identité de la machine/l'outil/le véhicule, l'heure et la position sont fournies par un identifiant unique agencé sur la machine, l'outil ou le véhicule.

7. Procédé selon l'une quelconque des revendications 1 à 6, dans lequel une unité de puce est agencée sur la machine, l'outil ou le véhicule, ladite unité de puce étant agencée pour fournir des données au système de journal numérique.

8. Procédé selon l'une quelconque des revendications 1 à 7, dans lequel un ou plusieurs capteurs sont agencés sur la machine, l'outil ou le véhicule, et dans lequel lesdits un ou plusieurs capteurs sont agencés pour détecter un changement de paramètre lié à une certaine activité et envoyer des données en référence audit changement de paramètre.

9. Procédé selon l'une quelconque des revendications 1 à 8, dans lequel des données dans le système de journal numérique sont envoyées à un serveur et sauvegardées, et dans lequel des données sauvegardées sont utilisées pour optimiser la maintenance d'une machine, d'un outil ou d'un véhicule spécifique.

10. Procédé selon l'une quelconque des revendications précédentes, dans lequel le procédé implique une procédure de vérification multiple dans laquelle la vérification numérique est complétée par au moins une autre vérification, réalisée par l'exécutant de l'activité, qui fournit d'abord des données et une vérification, ou réalisée par l'utilisateur de la machine, de l'outil ou du véhicule, lequel utilisateur effectue une vérification des données personnelles, ou complétée par les deux.

11. Procédé selon l'une quelconque des revendications précédentes, dans lequel le procédé implique la fourniture d'un plan de maintenance dynamique pour un utilisateur, ledit plan de maintenance dynamique étant agencé pour être modifié sur la base du changement d'au moins un paramètre d'entrée de données, tel que la date à laquelle une activité de maintenance a été réalisée, les données de performance de la machine/l'outil/le véhicule et/ou la position opérationnelle de la machine/l'outil/le véhicule.

12. Procédé selon l'une quelconque des revendications précédentes, dans lequel le procédé implique également la fourniture d'un calcul d'un coefficient d'optimisation de valeur machine sur la machine, l'outil ou le véhicule, les données suivantes étant fournies dans une plateforme numérique :
- des données de base sur la machine, l'outil ou le véhicule ;
- des données sur la maintenance réalisée à partir d'un journal de maintenance numérique conjointement avec les vérifications certifiées numériquement sur la maintenance effectuée ;
ledit procédé comprenant également
- le calcul ensuite du coefficient d'optimisation de la valeur machine ; et
- la fourniture du coefficient d'optimisation de la valeur machine.

13. Procédé selon la revendication 12, dans lequel les données de base sont au moins un paramètre concernant l'un quelconque des paramètres suivants : un fabricant, un modèle, une année de fabrication ou une combinaison de ceux-ci.

14. Procédé selon la revendication 12 ou 13, dans lequel les données suivantes sont également fournies dans la plateforme numérique et utilisées pour le calcul du coefficient d'optimisation de la valeur machine :
- des géodonnées liées à l'utilisation de la machine, de l'outil ou du véhicule.
